# EUROPÄISCHE PATENTANMELDUNG

(11) **EP 4 120 036 A1**
(43) Veröffentlichungstag der Anmeldung: **18.01.2023**
(21) Anmeldenummer: 21185888.1
(22) Anmeldetag: 15.07.2021
(51) Int. Cl.: G05B 19/418

(54) **VERFAHREN ZUR DIMENSIONIERUNG EINER AUFNAHMEVORRICHTUNG**

(71) Anmelder: Siemens Aktiengesellschaft, 80333 München (DE)
(72) Erfinder: Fürst, Johannes, 90480 Nürnberg (DE); Jäger, Tobias, 91083 Baiersdorf Igelsdorf (DE); Runde, Stefan, 04277 Leipzig (DE)

(57) **Zusammenfassung**

Die Erfindung betrifft ein Verfahren zur Dimensionierung einer Aufnahmevorrichtung, welche zur Verwendung in einem industriellen Prozess konfiguriert ist. Um ein verbessertes Verfahren zur Dimensionierung der Aufnahmevorrichtung anzugeben, werden folgende Schritte vorgeschlagen: Simulieren (2) einer Steuerung des industriellen Prozesses mittels einer virtuellen Steuerung, Ausgeben (10) dynamischer Steuergrößen anhand der Simulation der virtuellen Steuerung, Ermitteln (12) von dynamischen Prozessgrößen anhand der dynamischen Steuergrößen, Dimensionieren (14) der Aufnahmevorrichtung unter Berücksichtigung der ermittelten dynamischen Prozessgrößen.

## Beschreibung

Die Erfindung betrifft ein Verfahren zur Dimensionierung einer Aufnahmevorrichtung.

Ferner betrifft die Erfindung ein Verfahren zur Herstellung einer Aufnahmevorrichtung, welche nach einem derartigen Verfahren dimensioniert ist.

Überdies betrifft die Erfindung eine Steuereinheit umfassend mindestens einen Prozessor.

Darüber hinaus betrifft die Erfindung ein Computerprogramm umfassend Programm-Code, der von mindestens einem Prozessor ausgeführt werden kann und der bewirkt, dass der mindestens eine Prozessor ein derartiges Verfahren ausführt.

Bei der Herstellung von Bauteilen auf einer Werkzeugmaschine werden diese in einem Arbeitsraum fixiert werden. Eine derartige Werkzeugmaschine ist beispielsweise als Fräsmaschine oder Drehmaschine ausgeführt. Die mechanische Fixierung erfolgt mittels einer Aufnahmevorrichtung, welche beispielsweise als Spannvorrichtung ausgeführt ist. Eine derartige Aufnahmevorrichtung wird so ausgelegt, dass das aufzunehmende Bauteil bei den auftretenden Prozesskräften sicher auf der definierten Position gehalten wird, weswegen die Aufnahmevorrichtung, insbesondere mechanisch, ausreichend belastbar sein muss, sich nicht durch Toleranzen verformt und steif gegen die dynamischen Kräfte des Fertigungsprozesses ist. Dynamische Einwirkungen sind unter anderem relative Bewegungen eines Spanntisches gegenüber einem Werkzeug und umgekehrt.

Weitere Anforderungen an eine derartige Aufnahmevorrichtung sind, dass diese gleichzeitig günstig in Bezug auf Herstellung und Material sowie leicht für gutes Handling und Maschinendynamik ist. Um eine optimale Auslegung der Aufnahmevorrichtung zu erreichen, sind die kinematischen und dynamischen Eigenschaften der Werkzeugmaschine zu berücksichtigen. Die dynamischen Eigenschaften können unter anderem fertigungsvorgangsspezifische und/oder teileprogrammspezifische Bewegungen, die für die Herstellung der Zielgeometrie durchzuführen sind, umfassen.

Vor diesem Hintergrund liegt der Erfindung die Aufgabe zugrunde, ein verbessertes Verfahren zur Dimensionierung einer Aufnahmevorrichtung anzugeben.

Die Aufgabe wird erfindungsgemäß gelöst durch ein Verfahren zur Dimensionierung einer Aufnahmevorrichtung, welche zur Verwendung in einem industriellen Prozess konfiguriert ist, aufweisend folgende Schritte: Simulieren einer Steuerung des industriellen Prozesses mittels einer virtuellen Steuerung, Ausgeben dynamischer Steuergrößen anhand der Simulation der virtuellen Steuerung, Ermitteln von dynamischen Prozessgrößen anhand der dynamischen Steuergrößen und Dimensionieren der Aufnahmevorrichtung unter Berücksichtigung der ermittelten dynamischen Prozessgrößen.

Ferner wird die Aufgabe erfindungsgemäß gelöst durch ein Verfahren zur Herstellung einer Aufnahmevorrichtung, welche nach einem derartigen Verfahren dimensioniert ist.

Überdies wird die Aufgabe erfindungsgemäß gelöst durch eine Steuereinheit umfassend mindestens einen Prozessor, der eingerichtet ist, die folgenden Schritte auszuführen: Simulieren einer Steuerung des industriellen Prozesses mittels einer virtuellen Steuerung, Ausgeben dynamischer Steuergrößen anhand der Simulation der virtuellen Steuerung, Ermitteln von dynamischen Prozessgrößen anhand der dynamischen Steuergrößen und Dimensionieren der Aufnahmevorrichtung unter Berücksichtigung der ermittelten dynamischen Prozessgrößen.

Darüber hinaus wird die Aufgabe erfindungsgemäß gelöst durch ein Computerprogramm umfassend Programm-Code, der von mindestens einem Prozessor ausgeführt werden kann und der bewirkt, dass der mindestens eine Prozessor ein derartiges Verfahren ausführt.

Die in Bezug auf das Verfahren nachstehend angeführten Vorteile und bevorzugten Ausgestaltungen lassen sich sinngemäß auf die Steuereinheit und das Computerprogramm übertragen.

Der Erfindung liegt die Überlegung zugrunde, eine Dimensionierung einer Aufnahmevorrichtung, welche beispielsweise zur Aufnahme eines Werkstücks in einem industriellen Prozess konfiguriert ist, durch Einbeziehen von dynamischen Prozessgrößen, wie von der Aufnahmevorrichtung aufzunehmende Kräfte und Momente, zu verbessern. Eine derartige Dimensionierung kann unter anderem eine Positionierung und Festlegung von Wirkflächen, z.B. Klemmpunkte an einem Werkstück und/oder einem Spannteller, umfassen. Beispielsweise ist die Aufnahmevorrichtung als Spannvorrichtung ausgeführt und wird in einer Werkzeugmaschine eingesetzt. Der industrielle Prozess kann unter anderem Fräsen, insbesondere CNC-Fräsen, Drehen und/oder ein additives Verfahren umfassen.

Durch Simulieren einer Steuerung des industriellen Prozesses mittels einer virtuellen Steuerung werden Bearbeitungsbahnen, Bearbeitungsabläufe und Wege analysiert. Eine derartige virtuelle Steuerung ist beispielsweise die virtuelle Sinumerik, kurz VNCK, welche eine dynamische Simulation des Bearbeitungsprozesses ermöglicht. Insbesondere werden die relevanten Positionen der durch die Steuerung angesteuerten Komponenten im industriellen Prozess über die Zeit berechnet. Zusätzlich oder alternativ können Stellgrößen für dynamische Komponenten, Achsen und/oder zumindest eine Spindel, insbesondere eine Werkzeugspindel, berechnet werden. Auf Basis von Ergebnissen der Simulation der virtuellen Steuerung werden dynamische Steuergrößen ausgegeben. Beispielsweise werden eine Dynamickonfiguration, Einstellungen von Regler-Parametern, Einstellungen von Achsen sowie Kompensationsgrößen der Steuerung ausgegeben. In einem weiteren Schritt werden dynamische Prozessgrößen anhand der dynamischen Steuergrößen ermittelt. Die dynamischen Prozessgrößen können neben auf das Werkstück wirkenden Prozesskräften und Momenten auch kommende Bewegungsschritte umfassen. Insbesondere werden die von der Aufnahmevorrichtung aufzunehmenden Kräfte und Momente für alle relevanten Positionen über die Zeit berechnet. In einem folgenden Schritt erfolgt ein Dimensionieren der Aufnahmevorrichtung unter Berücksichtigung der ermittelten dynamischen Prozessgrößen. Bei der Dimensionierung wird beispielsweise eine weitere Simulation, welche ein, insbesondere dreidimensionales, Modell der für den industriellen Prozess relevanten Komponenten, welches zumindest die Aufnahmevorrichtung umfasst, mit den ermittelten dynamischen Prozessgrößen kombiniert, sodass die Aufnahmevorrichtung im Hinblick auf die im industriellen Prozess auftretenden Prozesskräfte optimal ausgeführt werden kann. Unter einer optimalen Ausführung ist unter anderem eine ausreichende, insbesondere mechanische, Belastbarkeit in Kombination mit einer leichten Ausführung für gutes Handling und Maschinendynamik und günstigen Herstellungskosten zu verstehen. Beispielsweise wird eine Werkzeugmaschine mittels eines 3D-Modells simuliert, das die Kinematik der Werkzeugmaschine abbildet. Der Prozessor der Steuereinheit kann unter anderem als Mikroprozessor, Mikrocontroller oder als ASIC (application-specific integrated circuit) ausgeführt sein. Das Computerprogramm kann einen "digitalen Zwilling", auch "digital twin" genannt, umfassen oder als ein solcher ausgebildet sein. Ein derartiger digitaler Zwilling ist beispielsweise in der Offenlegungsschrift US 2017/0286572 A1 dargestellt. Der Offenbarungsgehalt von US 2017/0286572 A1 wird durch Verweisung in die vorliegende Anmeldung mit einbezogen. Der "digitale Zwilling" ist beispielsweise eine digitale Repräsentanz der für den industriellen Prozess relevanten Komponenten.

Eine weitere Ausführungsform sieht vor, dass zum Dimensionieren der Aufnahmevorrichtung eine FEM-Simulation des industriellen Prozesses durchgeführt wird, welche mit den ermittelten dynamischen Prozessgrößen gespeist wird. Insbesondere umfasst die FEM-Simulation ein dreidimensionales, Modell der für den industriellen Prozess relevanten Komponenten, welches zumindest die Aufnahmevorrichtung umfasst. Die ermittelten dynamischen Prozessgrößen werden mit der FEM-Simulation kombiniert, sodass die Aufnahmevorrichtung im Hinblick auf die im industriellen Prozess auftretenden Prozesskräfte optimal ausgeführt werden kann. Beispielsweise wird eine Werkzeugmaschine mit Aufnahmevorrichtung, welche als 3D-Modell implementiert ist, das die Kinematik der Werkzeugmaschine abbildet, mittels der eines FEM-Lösers simuliert. Durch eine Kombination der Ergebnisse aus der Simulation der virtuellen Steuerung, insbesondere der virtuellen Sinumerik, mit einer FEM-Simulation wird eine hohe Präzision erreicht, sodass eine hohe Zuverlässigkeit hinsichtlich der Optimierung erreichbar ist. Somit kann beispielsweise eine Spannvorrichtung sehr exakt für auftretende statische und dynamische Belastungen ausgelegt und optimiert werden.

Eine weitere Ausführungsform sieht vor, dass die dynamischen Prozessgrößen Kräfte und Momente umfassen, welche von der Aufnahmevorrichtung auf ein Werkstück wirken, wobei die Kräfte und Momente in einer FEM-Simulation des industriellen Prozesses berücksichtigt werden. Durch die Verwendung einer virtuellen Steuerung können z.B. die Dynamikkonfigurationen der realen Maschine im Wesentlichen 1:1 abgebildete werden. Die Kräfte und Momente werden insbesondere mittels der Ergebnisse aus der Simulation der virtuellen Steuerung ermittelt. Somit ist die Aufnahmevorrichtung präzise und zuverlässig für auftretende statische und dynamische Belastungen auslegbar und optimierbar.

Eine weitere Ausführungsform sieht vor, dass eine Spannvorrichtung dimensioniert wird, wobei mittels der FEM-Simulation erforderliche Spannkräfte ermittelt werden, wobei die Spannvorrichtung unter Berücksichtigung der erforderlichen Spannkräfte dimensioniert wird. Eine derartige Spannvorrichtung kann als mechanische, hydraulische, magnetische oder vakuumtechnische Spannvorrichtung ausgeführt sein. Anforderungen an eine Spannvorrichtung sind unter anderem sicheres Spannen des Werkstücks und geringe Verformung desselben beim Spannen. Die Spannvorrichtung ist insbesondere hinsichtlich dieser Anforderungen durch eine FEM-Simulation unter Berücksichtigung der erforderlichen Spannkräfte optimal dimensionierbar.

Eine weitere Ausführungsform sieht vor, dass beim Dimensionieren der Aufnahmevorrichtung kritische Bearbeitungsschritte des industriellen Prozesses simuliert werden. Derartige kritische Bearbeitungsschritte sind unter anderem Schritte mit Lastspitzen, Momentspitzen, engen Radien, Bewegungsumkehr, Eindringen ins Werkstück, insbesondere eine Erstberührung sowie ein Verlassen des Werkstücks. Insbesondere werden nur die kritischen Bearbeitungsschritte des industriellen Prozesses simuliert, was zu einer niedrigen Rechenzeit bei gleichzeitig hoher Verlässlichkeit der Simulation führt.

Eine weitere Ausführungsform sieht vor, dass der industrielle Prozess ein spanendes Verfahren umfasst, wobei zur zum Dimensionieren der Aufnahmevorrichtung zusätzlich eine Zerspansimulation durchgeführt wird. Beispielsweise erfolgt im Rahmen Zerspansimulation eine Zerspankraftberechnung, um zu erwartende Kräfte zu ermitteln, was zu einer verbesserten Genauigkeit führt.

Eine weitere Ausführungsform sieht vor, dass beim Dimensionieren statische und dynamische Belastungen der Aufnahmevorrichtung simuliert werden. Dies führt zu einer verbesserten Genauigkeit der Simulation.

Eine weitere Ausführungsform sieht vor, dass anhand der statischen und dynamischen Belastungen eine Geometrie der Aufnahmevorrichtung optimiert wird. Eine Optimierung kann manuell, mittels zumindest eines Parameter-Sweeps eines Parameters der Geometrie und/oder mittels künstlicher Intelligenz, beispielsweise mittels eines, insbesondere trainierten, neuronalen Netzes, erfolgen. Durch eine derartige Optimierung wird eine Optimierung lokaler Dimensionen in Relation zu den einwirkenden statischen und dynamischen Kräften ermöglicht, das heißt Werkstoff wird dort vorgesehen, wo er gebraucht wird.

Ein Ausführungsbeispiel der Erfindung wird im Folgenden anhand einer Figur näher erläutert.

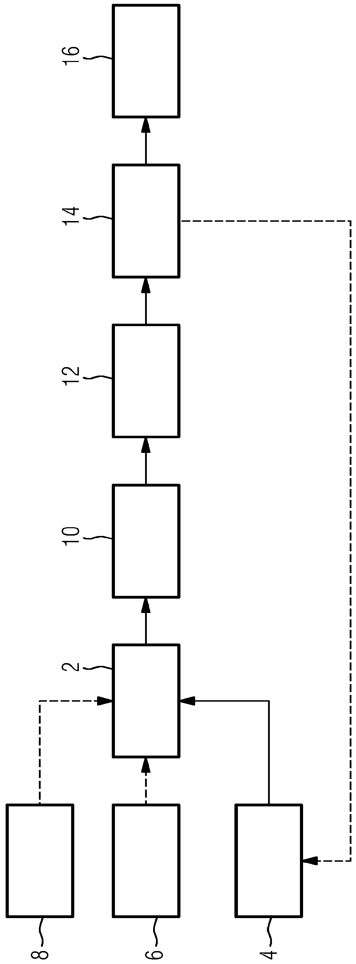

In der Figur ist ein Verfahren zur Herstellung einer Aufnahmevorrichtung, welche zur Verwendung in einem industriellen Prozess konfiguriert ist, gezeigt. Beispielsweise ist die Aufnahmevorrichtung als Spannvorrichtung ausgeführt und wird in einer Werkzeugmaschine eingesetzt. Der industrielle Prozess kann unter anderem Fräsen, insbesondere CNC-Fräsen, Drehen und/oder ein additives Verfahren umfassen. Das Verfahren beinhaltet das Simulieren 2 einer Steuerung des industriellen Prozesses mittels einer virtuellen Steuerung. Eine derartige virtuelle Steuerung ist beispielsweise die virtuelle Sinumerik, kurz: VNCK. Das Simulieren 2 des Bearbeitungsprozesses der Steuerung erfolgt dynamisch, wobei neben einer Aufnahmesituation 4 der Aufnahmevorrichtung eine Prozessdefinition 6 und eine Werkstückdefinition 8 berücksichtigt werden können. Durch die Verwendung einer virtuellen Steuerung können z.B. die Dynamikkonfigurationen der realen Maschine 1:1 abgebildete werden. Die Aufnahmesituation 4 beinhaltet unter anderem Positionsinformationen im Arbeitsraum und Informationen über eine Maschinenkinematik, beispielsweise der Werkzeugmaschine. Die Prozessdefinition 6 kann unter anderem Informationen über Werkzeuge, Werkzeugbahnen und/oder Technologiewerte umfassen. Die Werkstückdefinition 8 enthält unter anderem Informationen über eine Geometrie des Werkstücks und/oder Informationen darüber aus welchem Werkstoff das Werkstück hergestellt ist. In der Prozesssimulation werden Bearbeitungsabläufe und Wege analysiert. Aus Stellgrößen, z.B. auf die Antriebe der Werkzeugmaschine, werden Sollgrößen der Kräfte werden errechnet

In einem weiteren Schritt erfolgt ein Ausgeben 10 dynamischer Steuergrößen anhand der Simulation 2 der virtuellen Steuerung. Beispielsweise werden eine Dynamikkonfiguration, Einstellungen von Regler-Parametern, Einstellungen von Achsen sowie Kompensationsgrößen der Steuerung ausgegeben.

In einem weiteren Schritt erfolgt ein Ermitteln 12 von dynamischen Prozessgrößen anhand der dynamischen Steuergrößen. Unter anderem werden die von der Aufnahmevorrichtung aufzunehmenden Kräfte und Momente für alle relevanten Positionen über die Zeit, insbesondere unter Berücksichtigung der Maschine, des Bauteils, der Werkzeuge und der Spannsituation, berechnet. Beispielsweise erfolgt eine Sollgrößenausgabe der Prozesskräfte auf das Werkstück anhand von Stellgrößen auf die Antriebe der Maschine. Ferner können die dynamischen Prozessgrößen kommende Bewegungsschritte, insbesondere der Aufnahmevorrichtung, umfassen.

In einem weiteren Schritt erfolgt ein Dimensionieren 14 der Aufnahmevorrichtung unter Berücksichtigung der ermittelten dynamischen Prozessgrößen. Beim Dimensionieren 14 werden statische und dynamische Belastungen der Aufnahmevorrichtung simuliert, um beispielsweise erforderliche Spannkräfte zum Fixieren eines Werkstücks im industriellen Prozess zu ermitteln, wobei die Aufnahmevorrichtung unter Berücksichtigung der erforderlichen Spannkräfte dimensioniert wird. Während bei zu hohen Spannungen und/oder zu hohem Druck die Qualität der Aufnahmevorrichtung beeinträchtigt wird, kann sich das Werkstück bei zu geringen Spannungen aus einer Spannlage lösen.

Zur Ermittlung der erforderlichen Spannkräfte wird die Werkzeugmaschine mittels eines 3D-Modells simuliert, das die Kinematik der Werkzeugmaschine abbildet. Insbesondere wird eine FEM-Simulation des industriellen Prozesses durchgeführt. Eingangsgrößen für die FEM-Simulation sind beispielsweise auf das Werkstück wirkende Prozesskräfte, Momente und/oder kommende Bewegungsschritte. Ein Bearbeitungsprogramm zur virtuellen Bearbeitung des Werkstücks enthält zumindest kritische Bearbeitungsschritte des industriellen Prozesses. Derartige kritische Bearbeitungsschritte sind unter anderem Schritte mit Lastspitzen, Momentspitzen, engen Radien, Bewegungsumkehr, Eindringen ins Werkstück, insbesondere eine Erstberührung sowie ein Verlassen des Werkstücks.

Beinhaltet der industrielle Prozess ein spanendes Verfahren, wird unter anderem ein Materialabtrag simuliert. Zum Dimensionieren 14 der Aufnahmevorrichtung kann zusätzlich eine Zerspansimulation durchgeführt werden, im Rahmen, welcher eine Zerspankraftberechnung erfolgt, um zu erwartende Kräfte zu ermitteln. Die ermittelten Daten können optional in Eingangsparameter, beispielsweise in die Spannsituation, einer weiteren Iteration der Prozesssimulation überführt und verwendet werden, um durch die weitere Iteration der Prozesssimulation ein verbessertes Ergebnis zu erhalten. Nach dem erfolgreichen Dimensionieren 14 der Aufnahmevorrichtung erfolgt das Herstellen 16 derselben, wobei Daten zum Dimensionieren 14 der Aufnahmevorrichtung an eine Werkzeugmaschine übertragen werden und wobei die Aufnahmevorrichtung durch die Werkzeugmaschine angefertigt wird. Der gesamte Workflow kann in eine CAD/CAM-Kette integriert werden.

Zusammenfassend betrifft die Erfindung ein Verfahren zur Dimensionierung einer Aufnahmevorrichtung, welche zur Verwendung in einem industriellen Prozess konfiguriert ist. Um ein verbessertes Verfahren zur Dimensionierung der Aufnahmevorrichtung anzugeben, werden folgende Schritte vorgeschlagen: Simulieren 2 einer Steuerung des industriellen Prozesses mittels einer virtuellen Steuerung, Ausgeben 10 dynamischer Steuergrößen anhand der Simulation der virtuellen Steuerung, Ermitteln 12 von dynamischen Prozessgrößen anhand der dynamischen Steuergrößen, Dimensionieren 14 der Aufnahmevorrichtung unter Berücksichtigung der ermittelten dynamischen Prozessgrößen.

## Patentansprüche

1. Verfahren zur Dimensionierung einer Aufnahmevorrichtung, welche zur Verwendung in einem industriellen Prozess konfiguriert ist, aufweisend folgende Schritte:
- Simulieren (2) einer Steuerung des industriellen Prozesses mittels einer virtuellen Steuerung,
- Ausgeben (10) dynamischer Steuergrößen anhand der Simulation der virtuellen Steuerung,
- Ermitteln (12) von dynamischen Prozessgrößen anhand der dynamischen Steuergrößen,
- Dimensionieren (14) der Aufnahmevorrichtung unter Berücksichtigung der ermittelten dynamischen Prozessgrößen.

2. Verfahren nach Anspruch 1,
wobei zum Dimensionieren (14) der Aufnahmevorrichtung eine FEM-Simulation des industriellen Prozesses durchgeführt wird, welche mit den ermittelten dynamischen Prozessgrößen gespeist wird.

3. Verfahren nach einem der Ansprüche 1 oder 2,
wobei die dynamischen Prozessgrößen Kräfte und Momente umfassen, welche von der Aufnahmevorrichtung auf ein Werkstück wirken,
wobei die Kräfte und Momente in einer FEM-Simulation des industriellen Prozesses berücksichtigt werden.

4. Verfahren nach einem der Ansprüche 2 oder 3,
wobei eine Spannvorrichtung dimensioniert wird,
wobei mittels der FEM-Simulation erforderliche Spannkräfte ermittelt werden,
wobei die Spannvorrichtung unter Berücksichtigung der erforderlichen Spannkräfte dimensioniert wird.

5. Verfahren nach einem der vorherigen Ansprüche,
wobei beim Dimensionieren (14) der Aufnahmevorrichtung kritische Bearbeitungsschritte des industriellen Prozesses simuliert werden.

6. Verfahren nach einem der vorherigen Ansprüche,
wobei der industrielle Prozess ein spanendes Verfahren umfasst,
wobei zur zum Dimensionieren (14) der Aufnahmevorrichtung zusätzlich eine Zerspansimulation durchgeführt wird.

7. Verfahren nach einem der vorherigen Ansprüche,
wobei beim Dimensionieren (14) statische und dynamische Belastungen der Aufnahmevorrichtung simuliert werden.

8. Verfahren nach Anspruch 7,
wobei anhand der statischen und dynamischen Belastungen eine Geometrie der Aufnahmevorrichtung optimiert wird.

9. Verfahren zur Herstellung (16) einer Aufnahmevorrichtung, welche nach einem der vorherigen Ansprüche dimensioniert ist,
wobei Daten zum Dimensionieren (14) der Aufnahmevorrichtung an eine Werkzeugmaschine übertragen werden,
wobei die Aufnahmevorrichtung durch die Werkzeugmaschine angefertigt wird.

10. Steuereinheit umfassend mindestens einen Prozessor, der eingerichtet ist, die folgenden Schritte auszuführen:
- Simulieren (2) einer Steuerung des industriellen Prozesses mittels einer virtuellen Steuerung,
- Ausgeben (10) dynamischer Steuergrößen anhand der Simulation der virtuellen Steuerung,
- Ermitteln (12) von dynamischen Prozessgrößen anhand der dynamischen Steuergrößen,
- Dimensionieren (14) der Aufnahmevorrichtung unter Berücksichtigung der ermittelten dynamischen Prozessgrößen.

11. Steuereinheit nach Anspruch 10,
wobei der mindestens eine Prozessor eingerichtet ist, ein Verfahren nach einem der Ansprüche 2 bis 9 auszuführen.

12. Computerprogramm umfassend Programm-Code, der von mindestens einem Prozessor ausgeführt werden kann und der bewirkt, dass der mindestens eine Prozessor das Verfahren nach einem der Ansprüche 1 bis 9 ausführt.
